# EUROPÄISCHE PATENTSCHRIFT

(11) **EP 2 766 237 B1**
(45) Veröffentlichungstag und Bekanntmachung des Hinweises auf die Patenterteilung: **21.03.2018**
(21) Anmeldenummer: 12783495.0
(22) Anmeldetag: 01.10.2012
(51) Int. Cl.: B60W 30/095, B60W 30/06

(54) **VORRICHTUNG ZUR UNTERSTÜTZUNG EINES FAHRERS BEIM FAHREN EINES FAHRZEUGS ODER ZUM AUTONOMEN FAHREN EINES FAHRZEUGS**
DEVICE FOR ASSISTING A DRIVER DRIVING A VEHICLE OR FOR INDEPENDENTLY DRIVING A VEHICLE
DISPOSITIF D'AIDE À LA CONDUITE D'UN VÉHICULE OU DE CONDUITE AUTONOME D'UN VÉHICULE

(30) Priorität: 14.10.2011 DE 102011116169
(43) Veröffentlichungstag der Anmeldung: 20.08.2014
(73) Patentinhaber: Continental Teves AG & Co. oHG, 60488 Frankfurt (DE)
(72) Erfinder: STRAUSS, Matthias, 64319 Pfungstadt (DE); LÜKE, Stefan, 61191 Rosbach vor der Höhe (DE)
(74) Vertreter: Reuter, Andreas
(86) Internationale Anmeldenummer: PCT/DE2012/100306
(87) Internationale Veröffentlichungsnummer: WO 2013/071921

(56) Entgegenhaltungen:
- EP-A1- 2 181 892
- EP-A2- 2 322 401
- WO-A2-2010/060720
- DE-A1- 10 359 965
- DE-A1- 19 922 963
- DE-A1-102008 061 749
- DE-A1-102009 041 587
- DE-A1-102009 051 526
- US-A1- 2005 231 341
- US-A1- 2010 271 481
- US-A1- 2011 169 957

## Beschreibung

Die Erfindung betrifft eine Vorrichtung zur Unterstützung eines Fahrers beim Fahren eines Fahrzeugs sowie eine Vorrichtung zum autonomen Fahren eines Fahrzeugs

Aufgrund der Anforderung aus der passiven Sicherheit werden heutige Fahrzeuge immer unübersichtlicher. Dadurch können Fahrmanöver schwierig oder sogar gefährlich werden, beispielsweise Einparkvorgänge in beengten Parkhäusern.

Um diesem Trend entgegenzuwirken, wird immer mehr Sensorik verwendet, die dem Fahrer einen besseren Überblick über die Situation geben sollen. Am Anfang waren dies einfache Ultraschallsensoren, die dem Fahrer den Abstand zu evtl. Hindernissen über akustische Signale vermitteln.

Mit dem Einzug von Navigationsgeräte sind häufig Monitore im Fahrzeug verfügbar. Diese können u.a. genutzt werden, um dem Fahrer eine Draufsicht auf das Fahrzeug zu zeigen und anzuzeigen, wie weit die Objekte vom Fahrzeug entfernt sind.
Diese Displays können auch genutzt werden, um Bilder einer Rückfahrkamera anzuzeigen. Hierbei handelt es sich meist um eine Fischaugenkamera, die den gesamten Bereich hinter dem Fahrzeug erfassen kann.
Zusätzlich können dem Kamerabild zusätzliche Informationen über die tatsächliche Fahrzeugbreite und Trajektorie überlagert werden. Auch von den Ultraschallsensoren erkannte Parklücken können angezeigt werden. In manchen Systemen wird dem Fahrer sogar eine Trajektorie angezeigt, die er fahren soll, um in eine erkannte Lücke einzuparken.

Zumindest in Planung sind Systeme, die mehrere Kameras für das gesamte Fahrzeugumfeld haben. Durch eine Transformation der Bilddaten kann dem Fahrer nun eine photorealistische Umgebung des gesamten Fahrzeugs gezeigt werden.

In der EP 2181892 A1 wird ein Parkassistenzsystem für ein Kraftfahrzeug vorgeschlagen, das vier Kameras zur Abdeckung der vier Hauptrichtungen des Fahrzeugs und mehrere Abstandssensoren umfasst.

Die DE 10 2009 051 526 A1 zeigt ein System zum Darstellen einer Fahrzeugumgebung mit einer ein- bzw. verstellbaren Betrachtungsweise, umfassend wenigstens eine Sensoreinrichtung, die ausgebildet ist, um Abstände zu Gegenständen der Fahrzeugumgebung zu messen. Ferner ist ein Prozessor ausgebildet, um eine dreidimensionale Umgebungskarte, basierend auf den gemessenen Abständen, zu erzeugen. Ferner ist ein Display ausgebildet, die dreidimensionale Umgebungskarte darzustellen.

Die US 2010/0271481 A offenbart ein System zur Unterstützung bei Fahrmanövern, bei dem die Straßenoberfläche mittels einer Vielzahl von Kameras erfasst und aus den mittels der Kameras erfassten Ansichten fortlaufend eine vollständige Rundum-Vogelsicht-Darstellung erzeugt wird. Ferner erfolgen eine Anzeige der erzeugten Darstellung sowie eine Ermittlung von dreidimensionalen Objekten in einem Seitenabschnitt orthogonal zur Bewegungsrichtung des Fahrzeugs.

Ein Nachteil kann darin gesehen werden, dass Objekte nicht immer zuverlässig erkannt werden, da Objektinformationen nur aus Daten der Abstandssensoren ermittelt werden, während die Kameradaten der Anzeige auf einem Display dienen. Bei der Nutzung von Radar und Ultraschallsensoren als Abstandssensoren ergibt sich noch zusätzlich das Problem, dass sich die Höhe der Objekte nicht oder nur sehr ungenau vermessen lässt.

Aufgabe der vorliegenden Erfindung ist es, die genannten Nachteile der aus dem Stand der Technik bekannten Vorrichtungen zu überwinden.

Diese Aufgabe wird gelöst durch eine Vorrichtung zur Unterstützung eines Fahrers beim Fahren eines Fahrzeugs oder zum autonomen Fahren eines Fahrzeugs. Die Vorrichtung umfasst mehrere Abstands- und Kamerasensoren, eine Auswerteeinheit und eine Steuereinheit.
Die Abstandssensoren können Objekte unmittelbar vor und hinter dem Fahrzeug detektieren, z.B. im Bereich von Zentimetern bis wenigen Metern vor den Stoßfängern des Fahrzeugs. Auch Objekte leicht seitlich vor oder hinter dem Fahrzeug liegen, können von den Abstandssensoren detektiert werden. Die Abstandssensoren sollten einen Erfassungsbereich aufweisen, der alle Richtungen abdeckt, in die das Fahrzeug unmittelbar fahren kann.

Die Kamerasensoren erfassen einen Bereich rund um das Fahrzeug herum, bevorzugt sind sie daher als Weitwinkelkameras ausgebildet, deren Erfassungsbereiche sich bei benachbarten Kameras in Teilbereichen überlappen können.
Die Auswerteeinheit ermittelt aus den Daten der Abstands- und Kamerasensoren eine dreidimensionale Repräsentation der Erfassungsbereiche, d.h. zumindest der Fahrzeugfront und - heck umgebenden Bereiche, bevorzugt aber des 360° Bereichs, der das Fahrzeug umgibt.
Die Steuereinheit generiert unter Berücksichtigung der dreidimensionalen Repräsentation einen Hinweis an den Fahrer oder greift in die Fahrzeugsteuerung ein.
Die vorhandenen Sensorsysteme können also insbesondere genutzt werden, um Teilaufgaben des Fahrens zu übernehmen oder sogar komplett autonom zu fahren.

Die Erfindung bietet den Vorteil, dass Objekte zuverlässig und sicher erkannt werden. Die dreidimensionale Repräsentation der unmittelbaren Fahrzeugumgebung berücksichtigt Kamera- und Abstandssensordaten und ist daher sehr robust. Fahrmanöver können daher sehr präzise geplant oder durchgeführt werden.

In einer bevorzugten Ausführungsform erstellt die Auswerteeinheit mittels optischem Fluss eine dreidimensionale Rekonstruktion aus den Daten zumindest eines Kamerasensors. Es werden also aus der Bewegung von Objekten in einer Folge von 2D-Kamerabildern unter Berücksichtigung der Kamera-Eigenbewegung 3D-Informationen dieser Objekte rekonstruiert.

Die aus der Rekonstruktion gewonnenen 3D-Informationen über die Fahrzeugumgebung können vorteilhaft zusammen mit den Daten der Abstandssensoren in einem ortsfesten Gitter (englisch: Grid) fusioniert werden.

Erfindungsgemäß erkennt die Auswerteeinheit, während sich das Fahrzeug bewegt, aus den Daten mindestens eines Abstandssensors, ob ein Objekt im erfassten Bereich gegenüber dem ruhenden Fahrzeugumfeld bewegt ist. Bewegte Objekte lassen sich beispielsweise mit Ultraschall- oder Radarsensoren sehr gut erkennen.

Vorteilhaft werden diese Informationen auch verwendet, um eine 3D Rekonstruktion der Kameradaten vorzunehmen. Bewegte Objekte verfälschen eine solche Rekonstruktion, wenn sich das eigene Fahrzeug bewegt. Kameradaten, die einem bewegten Objekt entsprechen, werden vorzugsweise bei der Erstellung der dreidimensionalen Rekonstruktion nicht berücksichtigt. Bewegte Objekte können aber direkt von den Abstandssensoren erkannt werden.

Stationäre Objekte können dagegen bevorzugt aus den Kameradaten erkannt werden und zusätzlich durch Daten mindestens eines Abstandssensors bestätigt werden.

Bevorzugt werden bei Stillstand des Fahrzeugs bewegte Objekte aus den Daten mindestens eines Kamerasensors detektiert.

In einer bevorzugten Ausführungsform sind die Kameras derart im oder am Fahrzeug angeordnet, dass die Kameras, die den Bereich vor oder hinter dem Fahrzeug erfassen eine gegenüber der Längsrichtung des Fahrzeugs versetzte Blickrichtung aufweisen.

Vorteilhaft sind ausschließlich oder zumindest Ultraschallsensoren als Abstandsensoren vorgesehen.

Alternativ oder ergänzend sind Radar- und/oder Lidarsensoren als Abstandsensoren vorgesehen.

Bevorzugt ist für die Bereiche rechts und links seitlich des Fahrzeugs jeweils mindestens ein Abstandssensor vorgesehen.

Gemäß einer vorteilhaften Ausgestaltung der Erfindung ist die maximale Geschwindigkeit, mit der die Steuereinheit das Fahrzeug zur autonomen Fahrt veranlasst, abhängig von der Reichweite der Kamera- und Abstandssensoren in Richtung der Trajektorie, die die Steuereinheit für das Fahrzeug ermittelt hat.

Im Folgenden wird die Erfindung anhand von Ausführungsbeispielen und einer Figur näher erläutert.

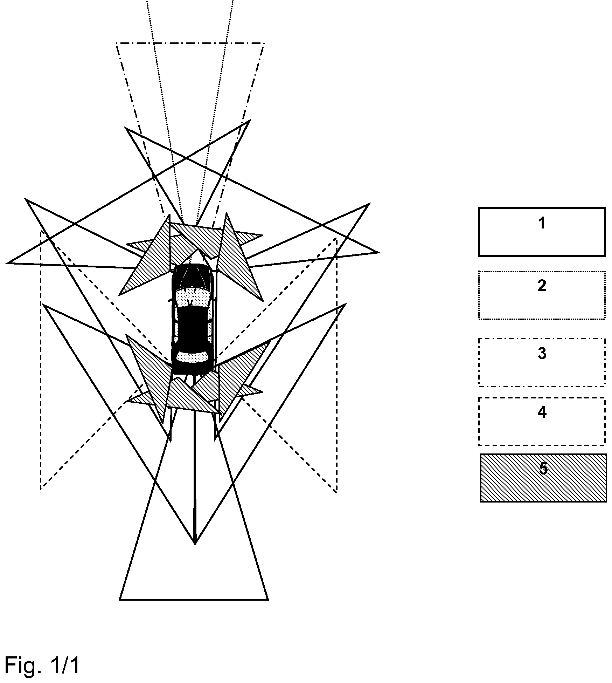

Die Figur zeigt schematisch eine Konfiguration von unterschiedlichen Umfeldsensoren eines Fahrzeugs mit unterschiedlichen Erfassungsbereichen (1-5). Dadurch, dass sehr viele Sensorkonfigurationen denkbar sind und diese hauptsächlich von den Öffnungswinkeln und Reichweiten der Sensoren und der Form des Fahrzeugs abhängen, sollte beachtet werden, dass für eine Automatisierung der Fahraufgabe eine ausreichende Überwachung der Bereiche erfolgen muss, in die das Fahrzeug fahren kann.

Bei der dargestellten Konfiguration sind mehrere Kameras im oder am Fahrzeug angeordnet, die durch ihre individuellen Erfassungsbereiche (1, durchgezogene Begrenzungslinien) die 360° Umgebung des Fahrzeugs bis zu mittleren Entfernungen abdecken, z.B. bis ca. 100 Meter. Eine derartige Kameraanordnung wird für Rundumsicht-Anzeigesysteme oder auch Top View Systeme eingesetzt. Top View Systeme bieten typischerweise eine Darstellung des Fahrzeugs und seiner Umgebung aus einer Vogelperspektive.

Wenn sich das Fahrzeug bewegt, kann aus den Bilddaten jeder einzelnen Kamera mittels der Methode des optischen Flusses eine 3D-Rekonstruktion der abgebildeten Umgebung des Fahrzeugs durchgeführt werden. Die Eigenbewegung der Kamera kann unter Kenntnis des gesamten optischen Flusses im Bild, der von statischen Objekten verursacht wird bestimmt werden. Vorteilhaft kann diese Berechnung vereinfacht werden indem Daten wie Einbaulage im bzw. am Fahrzeug und der Fahrzeugbewegung, die insbesondere aus der Fahrzeugsensorik (z.B. Geschwindigkeitssensor, Lenkwinkel- oder Lenkradsensor, Gier-, Nick- und Rollwinkel/-ratensensor) zur Ermittlung der Eigenbewegung genutzt werden. Beim optischen Fluss können charakteristische Punktmerkmale in aufeinanderfolgenden Bildern verfolgt (getrackt) werden. Da die Kamera sich mit dem Fahrzeug bewegt, kann mittels Triangulation eine dreidimensionale Information zu diesen Punktmerkmalen gewonnen werden, wenn die Punktmerkmale stationären Objekten in der Fahrzeugumgebung entsprechen.

Diese Zuordnung kann einfach und zuverlässig vorgenommen werden, wenn ein Abstandssensor Objekte und deren Relativbewegung zum Fahrzeug erfasst. Unter Berücksichtigung der Fahrzeugeigenbewegung kann der Abstandssensor schließlich ermitteln, ob sich ein Objekt gegenüber der ruhenden Fahrzeugumgebung bewegt oder ob es ein stationäres Objekt ist. Bewegte Objekte lassen sich beispielsweise mit Ultraschall oder Radarsensoren sehr gut erkennen. Diese Information wird verwendet, um eine 3D-Rekonstruktion der Kameradaten vorzunehmen. Bewegte Objekte verfälschen i.d.R. eine solche Rekonstruktion, wenn sich das eigene Fahrzeug bewegt. Bewegte Objekte können also direkt von den Abstandssensoren erkannt werden.

Statische Objekte werden zunächst von der Kamera über die Information aus der 3D-Rekonstruktion erfasst und können anschließend durch Messungen mindestens eines Abstandssensors als "nicht überfahrbar" bestätigt werden.

Eine Schwierigkeit besteht bei der 3D-Rekonstruktion von Daten einer Kamera, die in Fahrtrichtung (d.h. in Längsrichtung des Fahrzeugs) angebracht ist, dass im Bildmittelpunkt, dem so genannten "centre of expansion", keine Informationen zur 3D-Rekonstruktion vorliegen, da sich die Bildinformation hier nur wenig bis gar nicht ändern und somit keine Informationen über Objekte vorhanden sind. Lediglich im Nahbereich, in dem sich die Objekte nach unten aus dem Bild bewegen, können noch 3D Informationen gewonnen werden.

Für eine sichere Erkennung müssen die Kameras also so angebracht sein, dass sie nicht direkt in Fahrtrichtung blicken, dabei aber zusammen mit den anderen Sensoren das Fahrzeugumfeld komplett abdecken. Bei der dargestellten Sensorkonfiguration sind die beiden Kameras, deren Erfassungsbereich (1) nach vorne gerichtet ist, um einen Winkel von ca. 30 Grad gegenüber der Längs-/Fahrtrichtung des Fahrzeugs nach links bzw. rechts versetzt. Der Bereich hinter dem Fahrzeug wird zwar einerseits durch eine Heckkamera überwacht, die in Längsrichtung angeordnet ist, zudem gibt es aber noch zwei weitere schräg nach hinten blickende Kameras, die aufgrund ihres großen Erfassungswinkels den Raum hinter dem Fahrzeug zusammen ebenfalls fast vollständig erfassen. Die Blickrichtung dieser schräg nach hinten blickenden Kameras ist in der Figur etwa um 60 Grad gegenüber der Längs-/Rückwärtsrichtung des Fahrzeugs nach links bzw. rechts versetzt.

Alternativ zu einer solchen versetzen Kameraanordnung ist es auch möglich, andere Sensoren in Fahrtrichtung vorzusehen. So könnten Lidar- oder Stereokamerasysteme verwendet werden, um eine zusätzliche Sicherheit und vor allem Reichweite bei der Objekterkennung zu erreichen.

Mit einer Kamera können bei Stillstand des Fahrzeugs auch bewegte Hindernisse sehr gut erkannt werden. Dies kann ebenfalls über ein optisches Flussverfahren oder ein Verfahren zur Bestimmung der Änderung von Bildinhalten (Differenzbildverfahren) geschehen. In diesen Situationen könnte der Fahrer über Fußgänger, Radfahrer oder andere Fahrzeuge informiert werden, bei denen beim Anfahren eine Kollision möglich wäre.

Ein Fernbereichsradar, typischerweise mit einer Frequenz von 79 GHz, hat einen Erfassungsbereich (2, gepunktete Begrenzungslinie), der bis weit vor dem Fahrzeug reicht (z.B. mehrere hundert Meter). Derartige Radarsensoren sind häufig Bestandteil eines ACC-Systems (Abstandsregeltempomaten).

Eine Stereokamera überwacht den Raum vor dem Fahrzeug (3, strichpunktierte Begrenzungsline) bis zu mittleren Entfernungen und bietet räumliche Informationen zu Objekten in diesem Bereich.

Zwei Nahbereichsradarsensoren überwachen die Erfassungsbereiche (4, gestrichelte Begrenzungslinien) seitlich neben dem Fahrzeug, typischerweise mit einer Frequenz von 24 GHz. Sie dienen häufig auch der Totwinkelüberwachung (Blind Spot Detection).

Ultraschallsensoren überwachen Erfassungsbereiche (5, schraffierte Flächen), die unmittelbar vor den Stoßstangen des Fahrzeugs liegen. Derartige Ultraschallsensoren werden häufig zur Einparkunterstützung verwendet. Dieser Erfassungsbereich (5) bietet den Vorteil, dass alle Richtungen, in die sich das Fahrzeug unmittelbar bewegen kann, abgedeckt sind. Der Erfassungsbereich ist dagegen in Längsrichtung nicht sehr ausgedehnt, so dass er nur für untere Fahrzeuggeschwindigkeitsbereiche ausreicht. Durch Berücksichtigung der Daten und Erfassungsbereiche von Nahbereichsradarsensoren (4), Stereokamera (3), Lidarsensoren (nicht dargestellt in der Figur) und/oder Fernbereichsradarsensoren (2), können auch weiter entfernte Objekte ermittelt und bei einer autonomen Fahrzeugsteuerung berücksichtigt werden, wodurch eine höhere Geschwindigkeit ohne Sicherheitseinschränkungen realisierbar ist.

Sind nun zuverlässige Informationen von den Sensoren über das Umfeld des Fahrzeugs vorhanden, können weiterreichende Funktionen im Fahrzeug dargestellt werden. So kann z.B. autonom in Bremse und Lenkung eingegriffen werden. Damit sind eine automatische Parklückensuche und ein automatisches Einparken möglich. Es kann dabei sowohl unterstützend in die Lenkung als auch in die Längsregelung eingegriffen werden.

Das hohe Maß an zuverlässiger und räumlicher Erkennung der Fahrzeugumgebung mit derartigen Sensorkonfigurationen und Auswertungsmethoden, eröffnet weitere Umsetzungsmöglichkeiten.

Das Fahrzeug könnte beispielsweise alleine auf Parklückensuche gehen. Der Fahrer müsste das Fahrzeug dazu parallel an den geparkten Autos ausrichten. Danach kann das System automatisch mit geringer Geschwindigkeit an den parkenden Autos vorbeifahren, bis es eine Lücke gefunden hat und anhält. Der Fahrer müsste dann bei herkömmlichen Automatikgetrieben lediglich den Rückwärtsgang einlegen und könnte sich in die Parklücke rangieren lassen.

Weiterhin wäre es möglich in eine Art Parkhausmodus zu gehen, bei dem das Fahrzeug innerhalb eines Parkhauses automatisch eine Parklücke sucht.
Die Linienmarkierungen auf dem Boden können von den Parkkameras erkannt werden. Entsprechende Algorithmen einer Fahrspurerkennung könnten für diese Zwecke eingesetzt oder adaptiert werden. Schilder für Vorfahrt und Ein-/Ausfahrtregelungen, sowie Einbahnstraßen können von einer Kamera erkannt werden, die nach weiter nach vorne gerichtet ist, in der Figur beispielsweise die Stereokamera. Dies kann auch eine gewöhnliche monokulare Fahrerassistenzkamera sein, auf der in diesem Modus neben einer Verkehrszeichenerkennung zusätzliche Algorithmen laufen und andere wie z.B. automatische Fernlichtsteuerung durch Erkennung von Fahrzeuglichtern vorausfahrender oder entgegenkommender Fahrzeuge.

Da die Objekterkennung prinzipiell eine hohe Zuverlässigkeit erreicht, ist es beispielsweise auch möglich am Eingang des Parkhauses auszusteigen und das Fahrzeug alleine auf die Suche nach einem Parkplatz zu schicken. Über Carto-X-Kommunikation (C2X, Kommunikation zwischen Fahrzeug und einer Infrastruktur) wäre es auch direkt möglich den nächsten freien Parkplatz an das Fahrzeug zu übermitteln.

Bei Rückkehr des Fahrers könnte das Fahrzeug dann auch über einen speziellen Funkschlüssel, der auch Handystandards wie LTE oder WLAN beinhaltet, aktiviert werden, um wieder aus dem Parkhaus herauszufahren. Die Abrechnung des Parkhauses könnte z.B. über die Mobilabrechnung des Netzanbieters geschehen.
Zusätzlich wäre es möglich, dass eine C2X-Einheit in dem Parkhaus lokale Kartendaten über das Parkhaus versendet, um das Durchfahren für das System zu erleichtern. Diese Karten könnten alle Positionen von Objekten enthalten, also auch geparkten Fahrzeugen. Somit wäre die Klassifizierung der Objekte nicht mehr nötig.

Bei ausreichender Detailgenauigkeit und Zuverlässigkeit der Sensorik ist auch vorstellbar, dass das Fahrzeug in einer Innenstadt autonom (ohne Fahrer) nach einem Parkplatz sucht.
Das Fahrzeug würde dabei vorzugsweise entlang von parkenden Fahrzeugen fahren und nach einer freien Parklücke suchen. Wird innerhalb eines Straßenzuges keine freie Parklücke gefunden, kann das System mit Unterstützung von Navigationsdaten in anderen Straßenzügen nach einem Parkplatz suchen. Voraussetzung dafür wäre zusätzlich eine Zuverlässige Erkennung von Ampeln und vorfahrtsregelnden Schildern sowie eine Erkennung von Parkverbotsschildern.
Das Fahrzeug würde in diesem Modus nicht aktiv am Verkehr teilnehmen. Es würde sich dann nur langsam entlang der Straße fortbewegen und könnte von anderen Fahrzeugen überholt werden.

## Patentansprüche

1. Vorrichtung zur Unterstützung eines Fahrers beim Fahren eines Fahrzeugs oder zum autonomen Fahren eines Fahrzeugs umfassend Abstands-, Kamerasensoren, eine Auswerteeinheit und eine Steuereinheit, wobei die Abstandssensoren Objekte unmittelbar vor und hinter dem Fahrzeug detektieren können, die Kamerasensoren einen Bereich (1-5) rund um das Fahrzeug herum erfassen, die Auswerteeinheit aus den Daten der Abstands- und Kamerasensoren eine dreidimensionale Repräsentation der Erfassungsbereiche (1-5) ermittelt und die Steuereinheit unter Berücksichtigung der dreidimensionalen Repräsentation einen Hinweis an den Fahrer generiert oder in die Fahrzeugsteuerung eingreift,
**dadurch gekennzeichnet, dass**
während sich das Fahrzeug bewegt die Auswerteeinheit aus den Daten mindestens eines Abstandssensors erkennt, ob ein Objekt im erfassten Bereich (1-5) gegenüber dem ruhenden Fahrzeugumfeld bewegt ist.

2. Vorrichtung nach Anspruch 1, wobei die Auswerteeinheit mittels des optischen Flusses eine dreidimensionale Rekonstruktion aus den Daten zumindest eines Kamerasensors erstellt.

3. Vorrichtung nach Anspruch 1 oder 2, wobei Kameradaten, die einem bewegten Objekt entsprechen bei der Erstellung der dreidimensionalen Rekonstruktion vernachlässigt werden.

4. Vorrichtung nach einem der vorhergehenden Ansprüche, wobei bei Stillstand des Fahrzeugs bewegte Objekte aus den Daten mindestens eines Kamerasensors detektiert werden.

5. Vorrichtung nach einem der vorhergehenden Ansprüche, wobei die Kameras derart angeordnet sind, dass die Kameras, die den Bereich vor oder hinter dem Fahrzeug erfassen eine gegenüber der Längsrichtung des Fahrzeugs versetzte Blickrichtung aufweisen.

6. Vorrichtung nach einem der vorhergehenden Ansprüche, wobei Ultraschallsensoren als Abstandsensoren vorgesehen sind.

7. Vorrichtung nach einem der vorhergehenden Ansprüche, wobei Radar- und/oder Lidarsensoren als Abstandsensoren vorgesehen sind.

8. Vorrichtung nach einem der vorhergehenden Ansprüche, wobei für die Bereiche seitlich des Fahrzeugs jeweils mindestens ein Abstandssensor vorgesehen ist.

9. Vorrichtung nach einem der vorhergehenden Ansprüche, wobei die maximale Geschwindigkeit, mit der die Steuereinheit das Fahrzeug zur autonomen Fahrt veranlasst, abhängig ist von der Reichweite der Kamera- und Abstandssensoren in Richtung der Trajektorie, die die Steuereinheit für das Fahrzeug ermittelt hat.

## Claims

1. A device for assisting a driver when driving a vehicle or for autonomously driving a vehicle, comprising distance and camera sensors, an evaluation unit and a control unit, wherein the distance sensors can detect objects directly in front of and behind the vehicle, the camera sensors monitor an area (1-5) around the vehicle, the evaluation unit determines a three-dimensional representation of the monitoring areas (1-5) from the data of the distance and camera sensors, and the control unit generates a piece of advice for the driver or intervenes in the vehicle steering, taking account of the three-dimensional representation,
**characterized in that**
the evaluation unit detects, while the vehicle is moving, from the data of at least one of the distance sensors, whether an object in the monitored area (1-5) is moved relative to the stationary surroundings of the vehicle.

2. The device according to Claim 1, wherein the evaluation unit creates a three-dimensional reconstruction from the data of at least one of the camera sensors by means of the optical flow.

3. The device according to Claim 1 or 2, wherein camera data which correspond to a moved object are disregarded during the creation of the three-dimensional reconstruction.

4. The device according to any one of the preceding claims, wherein moved objects are detected from the data of at least one of the camera sensors when the vehicle is not in motion.

5. The device according to any one of the preceding claims, wherein the cameras are arranged such that the cameras which monitor the area in front of or behind the vehicle have a viewing direction that is offset with respect to the longitudinal direction of the vehicle.

6. The device according to any one of the preceding claims, wherein ultrasonic sensors are provided as distance sensors.

7. The device according to any one of the preceding claims, wherein radar and/or lidar sensors are provided as distance sensors.

8. The device according to any one of the preceding claims, wherein at least one distance sensor is provided in each case for the areas at each side of the vehicle.

9. The device according to any one of the preceding claims, wherein the maximum speed at which the control unit causes the vehicle to drive autonomously is dependent on the range of the camera and distance sensors in the direction of the trajectory that the control unit has determined for the vehicle.

## Revendications

1. Dispositif pour l'assistance à un conducteur lors de la conduite d'un véhicule ou pour la conduite autonome d'un véhicule, comprenant des capteurs de caméra de distance, une unité d'évaluation et une unité de commande, les capteurs de distance pouvant détecter des objets devant et derrière le véhicule, les capteurs de caméra détectant une zone (1-5) autour du véhicule, l'unité d'évaluation déterminant une représentation tridimensionnelle des zones de détection (1-5) à partir des données de capteurs de distance et de caméra, et l'unité de commande générant un avertissement au conducteur ou intervenant au niveau de la commande du véhicule, en prenant en compte la représentation tridimensionnelle,
**caractérisé en ce que**,
pendant que le véhicule se déplace, l'unité d'évaluation détermine à partir des données d'au moins un capteur de distance si un objet est en déplacement dans la zone détectée (1-5) par rapport à l'environnement du véhicule immobile.

2. Dispositif selon la revendication 1, l'unité d'évaluation générant une reconstruction tridimensionnelle au moyen du flux optique, à partir des données d'au moins un capteur de caméra.

3. Dispositif selon la revendication 1 ou 2, les données de caméra correspondant à un objet se déplaçant étant négligées lors de la génération de la reconstruction tridimensionnelle.

4. Dispositif selon l'une quelconque des revendications précédentes, des objets en déplacement étant détectés à partir des données d'au moins un capteur de caméra, lorsque le véhicule est à l'arrêt.

5. Dispositif selon l'une quelconque des revendications précédentes, les caméras étant disposées de telle sorte que les caméras captant la zone devant ou derrière le véhicule présentent une direction de visée décalée par rapport au sens longitudinal du véhicule.

6. Dispositif selon l'une quelconque des revendications précédentes, des capteurs à ultrasons étant prévus comme capteurs de distance.

7. Dispositif selon l'une quelconque des revendications précédentes, des capteurs radar et/ou lidar étant prévus comme capteurs de distance.

8. Dispositif selon l'une quelconque des revendications précédentes, respectivement au moins un capteur de distance étant prévu pour les zones latérales au véhicule.

9. Dispositif selon l'une quelconque des revendications précédentes, la vitesse maximale à laquelle l'unité de commande fait passer le véhicule en conduite autonome dépendant de la portée des capteurs de caméra et de distance dans la direction de la trajectoire que l'unité de commande a déterminée pour le véhicule.
